**Europäisches Patentamt**

(19) **European Patent Office**

**Office européen des brevets**

(11) Numéro de publication: **0 084 002**
**B1**

(12) **FASCICULE DE BREVET EUROPEEN**

(45) Date de publication du fascicule du brevet:
09.04.86

(51) Int. Cl.⁴: **H 04 Q 11/04, H 04 J 3/06**

(21) Numéro de dépôt: 83400017.6

(22) Date de dépôt: 04.01.83

(54) Central téléphonique numérique modulaire à plusieurs baies autocommutatrices autonomes semblables et dispositif de synchronisation inter-baies.

(30) Priorité: 08.01.82 FR 8200234

(43) Date de publication de la demande:
20.07.83 Bulletin 83/29

(45) Mention de la délivrance du brevet:
09.04.86 Bulletin 86/15

(84) Etats contractants désignés:
AT BE CH DE GB IT LI LU NL SE

(73) Titulaire: THOMSON-CSF TELEPHONE, 146, Boulevard de Valmy, F-92707 Colombes (FR)

(72) Inventeur: Athenes, Claude, THOMSON-CSF SCPI 173, bld Haussmann, F-75379 Paris Cedex 08 (FR)
Inventeur: Landez, Jean-Pierre, THOMSON-CSF SCPI 173, bld Haussmann, F-75379 Paris Cedex 08 (FR)
Inventeur: Tarbouriech, François, THOMSON-CSF SCPI 173, bld Haussmann, F-75379 Paris Cedex 08 (FR)

(74) Mandataire: Weinmiller, Jürgen et al, Zeppelinstrasse 63, D-8000 München 80 (DE)

(56) Documents cités:
SUPPLEMENT TO ELECTRICAL COMMUNICATION, vol. 55, no. 2, 1980, pages 16-23; "Expandable digital switching network for distributed control"
COLLOQUE INTERNATIONAL DE COMMUTATION, 7-11 mai 1979, pages 648-654, Paris (FR); J. HAURI et al.: "Utilisation des circuits intégrés à large échelle dans les réseaux de connexion de la gamme temporelle MT"
INTERNATIONAL SWITCHING SYMPOSIUM, 25-29 octobre 1976, pages 441-3-1/441-3-8, Kyoto, Tokyo (JP); T. EGAWA et al.: "A study on master-slave synchronization technique"
COLLOQUE INTERNATIONAL DE COMMUTATION ELECTRONIQUE, 28 mars - 2 avril 1966, pages 513-520, Paris (FR); W. NEU et al.: "Switching, Synchronizing, and signalling in PCM-exchanges"
COLLOQUE INTERNATIONAL DE COMMUTATION,

(56) Documents cités: (suite)
21-25 septembre 1981, pages 1-6, Session 34A, "paper 1", Montreal (CA); P. CHARRANSOL et al.: "Structure d'un système de commutation temporelle à commande répartie et à croissance linéaire"
COLLOQUE INTERNATIONAL DE COMMUTATION, 21-25 septembre 1981, pages 1-6, Session 13B, "paper 2", Montreal (CA); C. ATHENES et al.: "Des composants VLSI propres à la commutation téléphonique"

EP 0 084 002 B1

## Description

La présente invention se rapporte à un central téléphonique numérique modulaire à plusieurs baies autocommutatrices autonomes semblables et dispositif de synchronisation inter-baies.

Dans un central téléphonique numérique classique composé de plusieurs baies, la synchronisation de ces baies entre elles est réalisée par synchronisation rigoureuse en phase de leurs signaux d'horloge. Cependant, il est très difficile d'atteindre une grande précision dans cette synchronisation, en particulier à cause de la variation du temps de transmission des signaux sur les liaisons inter-baies, de la variation de la température, de la variation de la tension d'alimentation des circuits de baies, et de la dispersion des temps de transfert dans les circuits de synchronisation.

La présente invention a pour objet un dispositif de synchronisation inter-baies permettant de s'affranchir des variations et dispersions précitées, ce dispositif ne nécessitant qu'une simple synchronisation en fréquence entre les différentes baies, ce, sans perte d'informations dans les échanges inter-baies.

Dans un central téléphonique numérique conforme à l'invention, comportant plusieurs baies autocommutatrices autonomes semblables, toutes reliées en "point à point", l'une des baies, dite "baie pilote", comporte un oscillateur de référence en tant que source de signaux d'horloge, les autres baies comportant des oscillateurs synchronisables, et selon l'invention, chacune desdites autres baies comporte, dans la voie de réception de données provenant de la baie pilote, et dans au moins une voie de réception de données parmi celles provenant des autres baies, un circuit d'extraction de signal de synchronisation, les sorties de ces circuits d'extraction étant reliées à un circuit de sélection prioritaire d'un signal parmi plusieurs, ce signal étant en priorité le signal de synchronisation issu de ladite baie pilote, ou, à défaut, le signal de synchronisation issu de l'une des baies adjacentes à la baie considérée, la sortie de ce circuit de sélection étant reliée à l'entrée de commande de l'oscillateur synchronisable de la baie considérée.

Selon un mode de réalisation préféré de l'invention, ledit circuit d'extraction de signal de synchronisation comporte un compteur dont l'entrée de signaux d'horloge est reliée à un circuit d'extraction de signal d'horloge de la voie de réception de données considérée, l'entrée d'inhibition de ce compteur étant reliée à un circuit de détection de début de trame de ladite voie de réception de données, la sortie de ce circuit d'extraction étant constituée par la sortie dudit compteur correspondant à l'élément binaire de poids le plus fort nécessaire pour compter tous les éléments binaires d'une multitrame de signal MIC inter-baies, à savoir l'élément binaire de poids $2^9$ pour deux trames de 32 intervalles de temps ayant chacun un octet.

La présente invention sera mieux comprise à la lecture de la description détaillée d'un mode de réalisation, pris comme exemple non limitatif et illustré par le dessin annexé, sur lequel:

— la figure 1 est un bloc-diagramme simplifié d'un central conforme à l'invention, dans lequel on a explicité les liaisons de synchronisation inter-baies;
— la figure 2 est un bloc-diagramme détaillé des circuits nécessaires à la synchronisation de l'une des baies du central de la figure 1 par rapport à une autre baie;
— la figure 3 est un schéma d'un des circuits d'adaptation la figure 2, et
— la figure 4 est un bloc-diagramme simplifié d'un circuit assurant simultanément les fonctions d'un des circuits de synchronisation de transcodage et d'un des circuits de transcodage et d'extraction de signal de synchronisation de la figure 2.

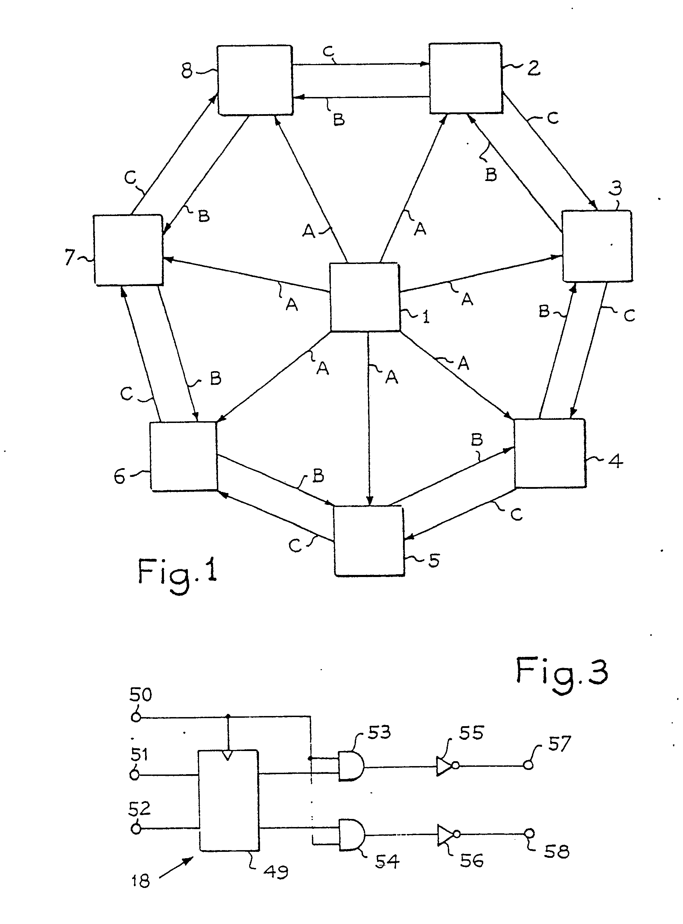

On a schématiquement représenté sur la figure 1 un central téléphonique numérique d'abonnés à huit baies identiques raccordées chacune à un même nombre d'abonnés. Ces baies sont du type décrit dans la communication de MM. ATHENES et AUDRIX, "Composants VLSI spéciaux pour la commutation téléphonique" de la conférence ISS de septembre 1981 à Montréal. Il est toutefois bien entendu que l'invention n'est pas limitée à un central à huit baies, et qu'elle peut s'appliquer à un nombre quelconque de baies, dans la limite de capacité du réseau de connexion des baies. Ces huit baies sont respectivement référencées 1 à 8. On choisit l'une de ces baies, par exemple la baie référencée 1, en tant que baie pilote de base, c'est-à-dire en tant que baie fournissant en permanence le signal de synchronisation à l'ensemble des baies du central, les autres baies étant dénommées baies d'extension. Toutes ces baies sont reliées entre-elles en "point à point" par des jonctions MIC bidirectionnelles, c'est-à-dire que n'importe quelle baie est reliée à chacune des autres baies par une liaison MIC bidirectionnelle. Pour simplifier le dessin on n'a représenté sur la figure 1 que les jonctions MIC véhiculant la synchronisation inter-baies.

Sur la figure 1, on a symbolisé par des flèches les liaisons de synchronisation entre les baies, ces liaisons étant classées selon trois ordres de priorité référencés A, B et C dans l'ordre décroissant. Ces liaisons de synchronisation sont en fait les jonctions MIC reliant les baies considérées dans le sens des flèches précitées, la synchronisation étant assurée comme expliqué ci-dessous. Toutes les liaisons de synchronisation référencées A partent de cette baie A vers les différentes baies d'extension. De préférence, le générateur de signaux d'horloge de la baie 1 est le plus précis de tous les générateurs de signaux d'horloge des baies du central téléphonique. Pour la commodité de la représentation, les baies d'extension ont été représentées disposées sur un cercle dont le centre est occupé par la baie référencée 1. Chacune des baies d'extension 2 à 8 reçoit une liaison de synchronisation B de l'une des deux baies d'extension adjacentes, et une liaison C de l'autre baie adjacente et émet respectivement vers ces deux baies adjacentes une liaison C et une liaison B. Dans chacune des baies d'extension, la sélection des signaux de synchronisation est réalisée grâce à un circuit de sélection d'un signal parmi plusieurs de type connu en soi, le signal A étant choisi en priorité tant qu'il est présent, sinon ledit circuit sélectionne le signal B, ou à défaut le signal C. On peut éventuellement prévoir la sélection d'un signal de synchronisation extérieur lorsqu'aucun des signaux A, B ou C n'est présent.

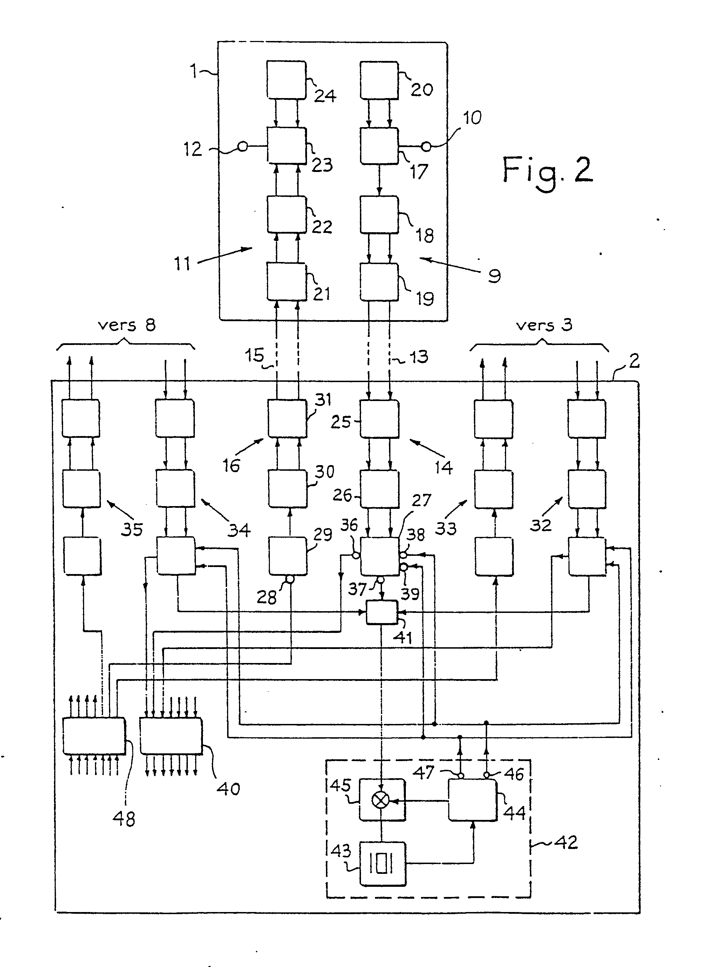

On a représenté sur la figure 2 de façon un peu plus détaillée, une partie du central représenté sur la figure 1, à savoir les baies 1 et 2. Sur cette figure 2, on a uniquement représenté pour les deux baies en question les circuits nécessaires à la synchronisation. En outre, pour la baie 1, on n'a représenté que les circuits de synchronisation relatifs à la baie 2, la baie 1 comportant six autres circuits de synchronisation, non représentés, relatifs aux baies 3 à 7, seules les horloges étant communes à tous les circuits de synchronisation de la baie 1.

Les signaux de synchronisation étant transmis, comme on le verra ci-dessous, concurremment avec les signaux de parole, la plupart des circuits de synchronisation décrits ci-dessous sont ceux déjà utilisés pour la transmission de la parole, et des données en général. La baie 1 comporte une voie 9 d'émission de données reliée à une borne 10 sur laquelle arrivent les données à émettre. Cette borne 10 est reliée de façon non représentée à l'une des sorties d'un réseau de connexion temporel, qui peut être avantageusement une matrice temporelle symétrique. La baie 1 comporte également une voie 11 de réception de données dont la sortie est reliée à une borne 12, cette borne étant reliée de façon non représentée à un autre réseau de connexion temporel, qui peut également être de façon avantageuse une matrice temporelle symétrique.

La sortie de la voie 9 de la baie 1 est reliée par une jonction MIC 13 à la voie 14 de réception de données de la baie 2. L'entrée de la voie 11 de la baie 1 est reliée par une jonction MIC 15 à la sortie de la voie d'émission de données 16 de la baie 2.

La voie 9 d'émission de données de la baie 1 comporte, dans l'ordre depuis la borne 10, un circuit 17 de synchronisation et de transcodage, un circuit 18 d'adaptation et un circuit 19 d'interface MIC. Le circuit 17 coopère avec un circuit d'horloge 20 lui fournissant un signal d'horloge à 4 kHz et 2,048 MHz pour un exemple de réalisation préféré.

La voie de réception de données 11 comprend, en allant de l'arrivée de la voie MIC 15 vers la borne 12, un circuit d'interface MIC 21, un circuit 22 d'extraction d'horloge, et un circuit 23 de transcodage et d'extraction de signal de synchronisation. Le circuit 23 coopère avec un circuit d'horloge 24 lui fournissant des signaux d'horloge à 4 kHz et 2,048 MHz pour ledit exemple de réalisation.

La voie 14 de réception de données de la baie 2 comporte, dans l'ordre depuis la jonction MIC 13, une interface 25, un circuit d'extraction d'horloge 26, et un circuit de transcodage et d'extraction de signal de synchronisation 27. Les circuits 25 à 27 sont respectivement identiques aux circuits 21 à 23 de la voie de réception de données 11. La voie 16 d'émission de données comporte, dans l'ordre à partir d'une borne 28 sur laquelle arrivent les données à émettre, un circuit 29 de synchronisation et de transcodage, un circuit 30 d'adaptation, et une interface 31, dont la sortie est reliée à la jonction MIC 15. Les circuits 29 à 31 sont respectivement identiques aux circuits 17 à 19.

La baie 2 comporte, pour établir les liaisons avec les six autres baies références 3 à 8, six autres voies de réception de données identiques à la voie 14 et six autres voies d'émission de données identiques à la voie 16. Sur la figure 2, on a uniquement représenté les voies d'émission et de réception de données relatives aux baies adjacentes 3 et 8 avec lesquelles la baie 2 est susceptible d'avoir des liaisons de synchronisation. Les baies 4 à 7 peuvent échanger des données avec la baie 2, et n'ont pas avec elle de liaisons de synchronisation mais avec la baie 1 en priorité, où à défaut, avec les baies qui leur sont adjacentes, comme représenté sur la figure 1. Les voies de réception et d'émission de données de la baie 2 assurant la liaison de synchronisation avec la baie 3 sont respectivement référencées 32 et 33 et ont la même composition que les voies 14 et 16 respectivement. Les voies de réception et d'émission de données de la baie 2 relatives à la liaison de synchronisation avec la baie 8 sont respectivement référencées 34 et 35 et ont la même composition que les voies 14 et 16 respectivement.

Le circuit 27 de transcodage et d'extraction de signaux de synchronisation comporte en particulier une sortie 36 de données, une sortie 37 de signal de synchronisation récupéré, une entrée 38 de signal de synchronisation local, et une entrée 39 de signal d'horloge local.

La sortie 36 de la voie de réception de données 14 est reliée, comme les sorties de données des sept autres voies de réception de données de la baie 2, à une entrée correspondante d'un réseau de connexion 40, qui peut avantageusement être une matrice temporelle symétrique. Le réseau de connexion 40 est relié, de façon connue en soi et non représentée, vers d'autres circuits de commutation par exemple. La sortie 37 du circuit 27 est reliée à l'une des trois entrées d'un circuit 41 de sélection prioritaire de signal dont les deux autres entrées sont reliées aux sorties de signal de synchronisation récupéré des voies 32 et 34. Le circuit 41 est réalisé de façon connue en soi, afin de sélectionner en priorité le signal de synchronisation issu de la voie 14, puis, si ce signal fait défaut, le signal de synchronisation issu de la voie 32, et enfin si ces deux premiers signaux de synchronisation font défaut, c'est le signal de synchronisation issu de la voie 34 qui est sélectionné. La sortie du circuit 41 est reliée à l'entrée de signal extérieur d'un circuit oscillant 42 à élément piézoélectrique asservi à boucle de verrouillage de phase et synchronisation par signal extérieur. Le circuit oscillant 42 comporte, de façon connue en soi, un oscillateur 43 à élément piézoélectrique, suivi d'un circuit diviseur de fréquence 44 et d'un comparateur de phases 45 qui reçoit d'autre part le signal de sortie du circuit 41 et commande la fréquence d'oscillation de l'oscillateur 43. Sur une sortie 46 du circuit 44, on prélève le signal de synchronisation local, et sur une autre sortie 47, on prélève le signal d'oscillateur divisé. Selon un exemple de réalisation, le signal de synchronisation a une fréquence de 4 kHz, et le signal d'oscillateur divisé a une fréquence de 2048 kHz. Les sorties 46 et 47 du circuit 44 sont reliées aux entrées correspondantes de tous les circuits de transcodage et d'extraction de signaux de synchronisation de la baie 2 tel que le circuit 27. Les entrées, telles que l'entrée 28, de tous les circuits de synchronisation et de transcodage, tels que le circuit 29, sont reliées à des sorties correspondantes d'un réseau de connexion 48 qui est relié, de façon connue en soi, et non représentée, à d'autres réseaux de connexion ou à des sources de données à émettre.

Les interfaces MIC de toutes les baies sont de type classique et n'ont pas été représentées sur le dessin. On précisera simplement que toutes ces interfaces comportent des transformateurs de symétrisation et des circuits d'adaptation connus en soi.

Les circuits d'extraction de signaux d'horloge tel que les circuits 26 et 22 sont par exemple du type décrit dans le brevet français 79 07 536.

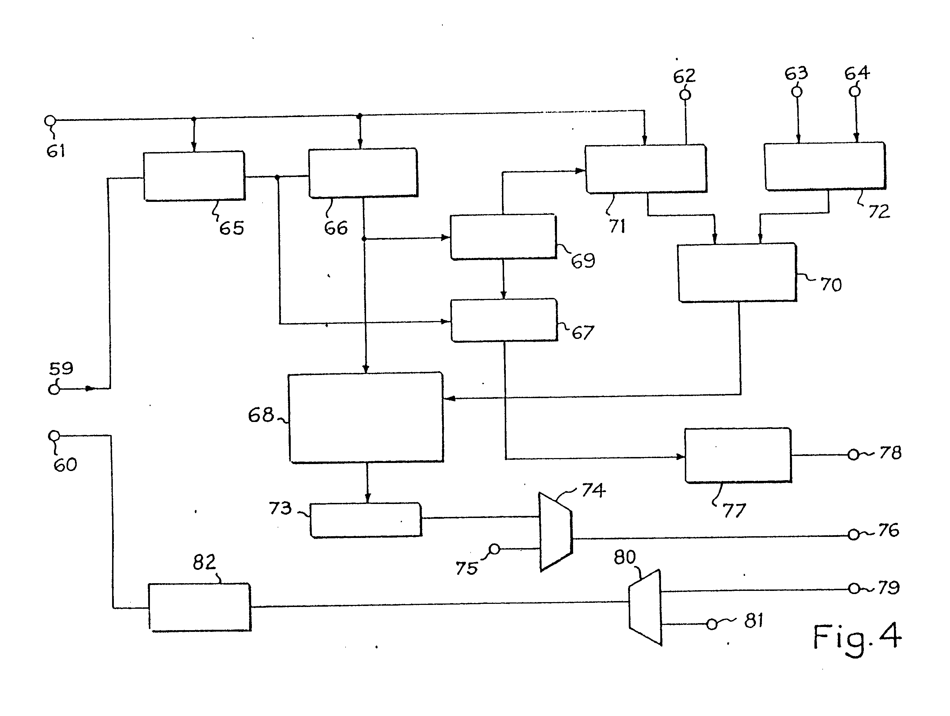

On a représenté sur la figure 3 un exemple de réalisation d'un circuit d'adaptation tel que le circuit 18. Ce circuit 18 comporte une bascule d'entrée 49 recevant des signaux d'horloge depuis une borne 50, la fréquence de ces signaux d'horloge est la même que celle des signaux d'horloge produits par les circuits 20 ou 24. Dans le cas de réalisation précité, cette fréquence d'horloge est de 2048 kHz. Les deux entrées de la bascule 49 sont reliées à des bornes 51 et 52 sur lesquelles arrivent, depuis le circuit 17, des signaux binaires positifs et négatifs, avantageusement codés en code tel que le code HDB3. Les sorties de la bascule 49 sont reliées à des premières entrées de portes logiques ET respectivement référencées 53 et 54. Les secondes entrées de ces deux portes sont reliées ensemble à la borne 50. Les sorties des portes 53 et 54 sont reliées via des amplificateurs logiques du type à collecteur ouvert 55 et 56 respectivement dont les sorties sont reliées aux bornes 57 et 58, ces deux dernières bornes constituant les bornes de sortie du circuit 18.

On a représenté sur la figure 4 le bloc-diagramme simplifié d'un exemple de réalisation d'un circuit regroupant un circuit de synchronisation et de transcodage tel que le circuit 29, et un circuit de transcodage et d'extraction de signal de synchronisation tel que le circuit 27. Ce circuit ayant déjà été décrit en détail dans ladite communication ISS 81, n'est décrit que très brièvement ci-dessous pour permettre de comprendre comment il est utilisé dans le central téléphonique de l'invention. Le circuit de la figure 4 comporte une entrée bifilaire 59 reliée à la sortie de signaux dont les composants correspondent à des polarités positive et négative d'un circuit d'extraction d'horloge tel que le circuit 26. Le circuit de la figure 4 comporte également une sortie bifilaire 60 reliée à l'entrée d'un circuit adaptateur tel que le circuit 18. Le circuit de la figure 4 comporte également une entrée 61 de signaux d'horloge récupérés provenant d'un circuit tel que le circuit 26, une sortie 62 de signaux de synchronisation reçus, et deux entrées 63, 64, recevant respectivement des signaux d'horloge et des signaux de synchronisation locaux d'un circuit tel que le circuit 42.

L'entrée 59 du circuit de la figure 4 est reliée à l'entrée d'un convertisseur HDB3 (haute densité bipolaire)-binaire 65 dont la sortie est reliée à l'entrée série d'un registre 66 de conversion série-parallèle et à l'entrée d'un circuit 67 de détection d'alarmes. La sortie parallèle du registre 66 est reliée à l'entrée d'une mémoire vive 68 et à l'entrée d'un circuit 69 de détection de perte et de récupération du code de verrouillage de trame. La mémoire 68 doit pouvoir mémoriser deux trames complètes d'un signal téléphonique MIC, c'est-à-dire qu'elle doit avoir une capacité d'au moins 64 octets. L'adressage de la mémoire 68 est effectué par un circuit logique 70 relié à un compteur 71 de base de temps distante et à un compteur 72 de base de temps locale. Le circuit 69 est relié au circuit 67 et au circuit 71. La sortie de la mémoire 68 est reliée à un registre 73 de transformation parallèle-série dont la sortie série est reliée à une entrée d'un multiplexeur 74 dont une autre entrée est reliée à une borne 75 et dont la sortie est reliée à une borne 76 qui est elle-même reliée à un réseau de connexion tel que le réseau 40. La borne 75 est reliée à un circuit (non représenté) permettant d'élaborer un code de test de réseau. La sortie du circuit de détection d'alarmes 67 est reliée par l'intermédiaire d'un registre 77 à une borne 78 elle-même reliée à l'unité de commande (non représentée) de la baie correspondante. Une jonction sortante d'un réseau de connexion de la baie tel que le réseau 48, est reliée à une borne 79 du circuit de la figure 4. La borne 79 est reliée à une entrée d'un multiplexeur d'émission 80 dont une autre entrée est reliée à une borne 81. La borne 81 est reliée à un circuit logique (non représenté) élaborant des intervalles de temps de synchronisation, en général les intervalles de temps 0 pour le système MIC. La sortie du multiplexeur 80 est reliée par l'intermédiaire d'un convertisseur binaire-HDB3 référencé 82 à la borne 60.

On remarquera que dans le circuit de la figure 4, et dans le cas de l'exemple de réalisation précité pour lequel le signal d'horloge a une fréquence de 2,048 MHz, et pour lequel le signal de synchronisation a une fréquence de 4 kHz, le compteur constituant la base de temps distante 71 comporte neuf cellules, et la cellule correspondant à l'élément binaire de poids le plus fort est reliée à la borne 62. Ainsi, on obtient très facilement à partir du signal d'horloge récupéré le signal de synchronisation nécessaire au fonctionnement des baies d'extension 2 à 8 à partir du signal d'horloge extrait du signal multiplexé MIC (conforme CEPT dans le cas présent) envoyé par la baie pilote de base 1 directement (liaison de synchronisation A de la figure 1) ou par l'intermédiaire d'une baie d'extension adjacente (liaison de synchronisation B ou C).

En fonctionnement normal, c'est-à-dire lorsque les signaux sont transmis correctement et qu'il n'y a donc pas de perte de verrouillage de trame, les données arrivant sur la borne 10 sont émises par la voie 9 au rythme des signaux d'horloge fournis par le générateur 20 de la baie 1. A la réception, dans la baie 2, le circuit 26 extrait lesdits signaux d'horloge et les transmet au circuit 27. Dans ce circuit 27, le compteur 71 compte, au rythme de ces signaux d'horloge récupérés, les éléments binaires incidents qui sont rangés par octets dans la mémoire 68, chacun de ces octets correspondant à un intervalle de temps de la trame MIC formée par la voie d'émission 9 de la baie 1. Ce comptage d'octets est effectué par les trois éléments binaires de poids faible du compteur 71. Les cinq éléments binaires suivants définissent le rang d'un intervalle de temps au sein d'une trame de 32 intervalles de temps. Le neuvième élément binaire du compteur 71, de poids le plus fort, permet de compter les multitrames de deux trames. Chaque trame durant 125 microsecondes, ce neuvième élément binaire du compteur 71 passe à "1" à la fréquence de 4 kHz. Par ailleurs le circuit 69 est chargé de reconnaître le code de verrouillage de trame. Dès que ce circuit 69 détermine qu'il y a eu perte de verrouillage de trame, il force à "0" la sortie du compteur 71 reliée à la borne 62 et correspondant audit neuvième élément binaire, et ce, tant qu'il n'a pas retrouvé le code de verrouillage de trame. Dès que ce code est retrouvé, cette sortie du compteur 71 est libérée, et le signal à 4 kHz peut réapparaître sur la borne 62.

La borne 62 étant reliée à la sortie 37 du circuit 27, est donc aussi reliée à l'entrée du circuit de sélection prioritaire 41. Tant que le signal à 4 kHz est présent sur la borne 62, c'est lui qui est choisi par le circuit 41 et sert à synchroniser l'oscillateur 42. Dès la dispersion du signal à 4 kHz, c'est-à-dire dès l'inhibition à la sortie du compteur reliée à la borne 62, et compte tenu du temps de réaction du circuit 41, ce dernier sélectionne le signal de synchronisation issu de la voie de réception 32 et provenant donc de la baie 1 via la baie 3 (liaison B). Si ce signal est lui aussi inhibé, le circuit 41 sélectionne le signal de synchronisation issu de la voie de réception 34 et provenant donc de la baie 1 via la baie 8 (liaison C). Si aucun de ces signaux de synchronisation n'est disponible, le circuit 41 peut sélectionner un signal de synchronisation provenant d'une autre source si cette dernière est prévue, sinon il y a déclenchement d'une alarme.

On notera que l'on peut utiliser le signal de synchronisation issu de l'oscillateur 42 (borne 46) de l'une des baies 2 à 8 pour synchroniser d'autres baies (non représentées) du même central ou d'un central distant, ou d'un groupe de baies exportées.

Lorsque l'une des baies 2 à 8 émet des données vers la baie 1, le signal de synchronisation disponible dans le circuit de transcodage et d'extraction de signal de synchronisation 23 n'est pas utilisé pour synchroniser le générateur 24, du fait que ce dernier est directement asservi en phase au générateur pilote 20. La gigue de phase due aux circuits et lignes de transmission entre les baies est facilement compensée par la mémoire de trames 68 du circuit de transcodage et d'extraction de signal de synchronisation 23.

Le dispositif de l'invention permet de synchroniser les différentes baies d'un central par rapport au générateur d'horloge de la baie pilote 1 même lorsque les jonctions MIC reliant ces différentes baies à la baie pilote ont des longueurs très différentes, la longueur de ces jonctions pouvant aller jusqu'à 220 mètres environ pour une atténuation de −6 dB, et pouvant être beaucoup plus grande si l'on utilise des répéteurs, et ce pratiquement sans perte d'informations.

**Revendications**

1. Central téléphonique numérique modulaire à plusieurs baies autocommutatrices autonomes semblables et dispositif de synchronisation inter-baies, toutes les baies étant reliées en "point à point", l'une des baies, dite "baie pilote" (1), comportant un oscillateur de référence (20) en tant que source de signaux d'horloge, les autres baies comportant des oscillateurs synchronisables (42), caractérisé par le fait que chacune desdites autres baies comporte, dans la voie (14), de réception de données provenant de la baie pilote, et dans au moins une voie (32, 34) de réception de données parmi celles provenant des autres baies, un circuit (27) d'extraction de signal de synchronisation, les sorties de ces circuits d'extraction étant reliées à un circuit (41) de sélection prioritaire d'un signal parmi plusieurs, ce signal étant en priorité le signal de synchronisation issu de ladite baie pilote, ou, à défaut, le signal de synchronisation issu de l'une des baies adjacentes à la baie considérée, la sortie de ce circuit de sélection étant reliée à l'entrée de commande de l'oscillateur synchronisable de la baie considérée.

2. Central téléphonique selon la revendication 1, caractérisé par le fait que ledit circuit d'extraction de signal de synchronisation comporte un compteur (71), dont l'entrée de signaux d'horloge est reliée à un circuit (26) d'extraction de signal d'horloge de la voie de réception de données considérée, l'entrée d'inhibition de ce compteur étant reliée à un circuit (69) de détection de début de trame de ladite voie de réception de données, la sortie (37) de ce circuit d'extraction étant constituée par la sortie (62) dudit compteur correspondant à l'élément binaire de poids le plus fort nécessaire pour compter tous les éléments binaires d'une multitrame de signal MIC inter-baies, à savoir l'élément binaire de poids $2^9$ pour deux trames de 32 intervalles de temps ayant chacun un octet.

## Patentansprüche

1. Modulare Digital-Telefonzentrale mit mehreren gleichartigen autonomen Selbstwählvermittlungsschränken und einer Synchronisationseinrichtung für die Schränke, wobei alle Schränke in Punkt-zu-Punkt-Verbindung stehen und einer der Schränke, "Pilotschrank" (1) genannt, einen Bezugsoszillator (20) als Taktsignalquelle besitzt, während die anderen Schränke synchronisierbare Oszillatoren (42) aufweisen, dadurch gekennzeichnet, daß jeder der anderen Schränke im Datenempfangskanal (14), der vom Pilotschrank kommt, sowie in mindestens einem Datenempfangskanal (32, 34), der von einem der anderen Schränke kommt, einen Entnahmeschaltkreis (27) zur Entnahme des Synchronisationssignals aufweist, wobei die Ausgänge dieser Entnahmeschaltkreise an einen Schaltkreis (41) zur Prioritätsselektion eines Signals aus mehreren Signalen führen, das prioritär das Synchronisationssignal des Pilotschranks ist und ansonsten das Synchronisationssignal eines der dem betreffenden Schrank benachbarten Schränke ist, wobei der Ausgang dieses Selektionsschaltkreises an den Steuereingang des synchronisierbaren Oszillators des betreffenden Schranks angeschlossen ist.

2. Telefonzentrale nach Anspruch 1, dadurch gekennzeichnet, daß der Entnahmeschaltkreis zur Entnahme des Synchronisationssignals einen Zähler (71) aufweist, dessen Taktsignaleingang mit einem Schaltkreis (26) zur Entnahme des Taktsignals vom betreffenden Datenempfangskanal verbunden ist, wobei der Sperreingang dieses Zählers an einen Schaltkreis (69) zur Erkennung des Rahmenbeginns auf diesem Datenempfangskanal führt und der Ausgang (37) dieses Entnahmeschaltkreises von dem Zählerausgang (62) gebildet wird, der einem Binärelement einer so hohen Gewichtung entspricht, wie es zum Zählen aller Binärelemente eines Überrahmens des PCM-Signals zwischen den Schränken benötigt wird, d.h. das Binärelement des Gewichts $2^9$ für zwei Rahmen von je 32 je ein Oktett enthaltenden Zeitintervallen.

## Claims

1. A modular digital telephone exchange having several similar and autonomous switching bays and a device for inter-bay synchronization, all the bays being connected on a point-to-point basis, one of the bays, called "pilot bay" (1), comprising a reference oscillator (20) for providing clock signals, the other bays comprising synchronizable oscillators (42), characterized in that each one of said other bays comprises in the data reception channel (14) coming from the pilot bay, and in at least one data reception channel (32, 34) out of the channels coming from other bays, a synchronization signal extraction circuit (27), the outputs of these extraction circuits being connected to a circuit (41) for selecting by priority one signal out of several signals, this signal being the synchronization signal coming from the pilot bay or, in the absence thereof, the synchronization signal coming from one of the adjacent bays to the respective bay, the output of this selection circuit being connected to the control input of the synchronizable oscillator in the considered bay.

2. A telephone exchange according to claim 1, characterized in that said synchronization signal extraction circuit comprises a counter (71), the clock signal input of which is connected to a clock signal extraction circuit (26) of the respective data reception channel, the inhibition input of this counter being connected to a circuit (69) for detecting the beginning of a frame on that data reception channel, the output (37) of this extraction circuit being constituted by the counter output (62) corresponding to the highest value binary element necessary for counting all the binary elements of a multiframe in the inter-bay PCM signal, that means, the binary element of the weight $2^9$ for two frames of 32 time intervals having each one octet.

Fig.1

Fig.3

Fig. 2

Fig. 4